(19) Europäisches Patentamt
European Patent Office
Office européen des brevets

(11) **EP 2 008 952 B1**

(12) **EUROPÄISCHE PATENTSCHRIFT**

(45) Veröffentlichungstag und Bekanntmachung des Hinweises auf die Patenterteilung:
**02.04.2014  Patentblatt 2014/14**

(51) Int Cl.:
**B65G 47/51** *(2006.01)*      **B65G 47/68** *(2006.01)*

(21) Anmeldenummer: **07012378.1**

(22) Anmeldetag: **25.06.2007**

(54) **Verfahren zum Speichern und Befördern von Produkten und eine Niederdruck-Speichervorrichtung hierfür**

Method for storing and conveying products and a low-pressure storage device therefor

Procédé de stockage et de convoyage de produits et dispositif de stockage à basse pression correspondant

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**31.12.2008  Patentblatt 2009/01**

(73) Patentinhaber: **Krones AG**
**93073 Neutraubling (DE)**

(72) Erfinder:
• **Hüttner, Johann**
**84066 Mallersdorf-Pfaffenberg (DE)**

• **Seger, Martin**
**92318 Neumarkt i.d. Opf (DE)**

(74) Vertreter: **Grünecker, Kinkeldey, Stockmair & Schwanhäusser**
**Leopoldstrasse 4**
**80802 München (DE)**

(56) Entgegenhaltungen:
**EP-A- 1 323 650      EP-A- 1 681 249**
**JP-A- 2001 240 238   US-A- 3 040 870**
**US-A- 4 361 759**

EP 2 008 952 B1

**Beschreibung**

Die vorliegende Erfindung betrifft ein Verfahren zum Speichern und Befördern von Produkten in einer Niederdruck-Speichervorrichtung gemäß dem Oberbegriff von Anspruch 1 und eine Niederdruck-Speichervorrichtung gemäß dem Oberbegriff von Anspruch 8.

Aus dem Stand der Technik ist es allgemein bekannt, den Materialfluss zwischen einzelnen Arbeitsstationen in beispielsweise einer Abfüll- und Verpackungsanlage durch Speichervorrichtungen bzw. Speichertische zu entkoppeln. Eine derartige Speichervorrichtung ist beispielsweise nachgeordnet zu einer Abfüllmaschine und vorgeordnet zu einer Verpackungsmaschine vorgesehen. Durch die Speichervorrichtung kann bei einer kurzfristigen Betriebsstörung der Verpackungsmaschine ein vollständiges Stilllegen der Abfüll- und Verpackungsanlage vermieden werden. In diesem Fall werden die von der Abfüllmaschine zugeführten Produkte von der Speichervorrichtung vorübergehend gespeichert. Die Produkte können deshalb auch bei schwankenden Arbeitsgeschwindigkeiten an einzelnen Arbeitsstationen in einer Anlage kontinuierlich befördert werden.

Die DE 25 04 264 A1 offenbart eine Speichervorrichtung mit einer ersten Zufuhrbahn, einer Speicherbahn und einer zwischen der ersten Zufuhrbahn und der Speicherbahn vorgesehenen zweiten Zufuhrbahn. Bei dieser bekannten Speichervorrichtung werden bei Normalbetrieb die Produkte lediglich über die erste Zufuhrbahn von einem ersten, einen Einlass aufweisenden Ende zu einem zweiten, einen Auslass aufweisenden Ende dieser Speichervorrichtung befördert. Bei Normalbetrieb der Speichervorrichtung sind demnach die zweite Zufuhrbahn und die Speicherbahn stillgelegt und die Produkte werden in einer geradlinigen Bewegung durch diese vorbekannte Speichervorrichtung bewegt. Im Falle von Betriebsstörung einer nachgeordnet der Speichervorrichtung angeordneten Arbeitsstation, staut sich das Produkt von dem den Auslass aufweisenden Ende der Speichervorrichtung, da die erste Zufuhrbahn der Speichervorrichtung weiterhin betrieben wird und weitere Produkte zu der Speichervorrichtung von einer vorgeordneten Arbeitsstation zu dieser zugeführt werden. Die angestauten Produkte werden über eine seitlich zu der ersten Zufuhrbahn vorgesehenen Einlauföffnung nahe des Einlasses der Speichervorrichtung auf die zweite Zufuhrbahn und die Speicherbahn überführt. Hierdurch wird benachbart zu der ersten Zufuhrbahn ein Speicher aufgebaut. Die Speichervorrichtung wird nun derart betrieben, dass auch die zweite Zufuhrbahn und die Speicherbahn eingeschaltet werden. Demzufolge hat die Speicherbahn gemäß dieser bekannten Vorrichtung nur im Speicherbetrieb der Speichervorrichtung eine Funktion. Die Produkte werden über die Speicherbahn und die zweite Zufuhrbahn in Richtung des Auslasses der Speichervorrichtung befördert. Sobald die nachgeordnete Arbeitsstation erneut unter normalen Betriebsbedingungen betrieben wird, werden die auf der Speicherbahn und der zweiten Zufuhrbahn gespeicherten Produkte abgefördert. Nach Entleeren des Speichers und Erreichen eines dynamischen Gleichgewichts werden die zweite Zufuhrbahn und die Speicherbahn erneut stillgelegt.

Aus dem Stand der Technik sind auch Speichervorrichtungen bekannt, bei welchen die Speicherbahn sowohl bei Normalbetrieb als auch bei Speicherbetrieb der Speichervorrichtung betrieben wird. Eine derartige Vorrichtung ist aus der EP 1 144 285 B1 bekannt, die als gattungsbildend für das Verfahren und die Vorrichtung der vorliegenden Erfindung angesehen wird.

Die EP 1 144 285 B1 offenbart eine Speichervorrichtung, bei welcher Speicherbahnen an beiden Seiten einer Zufuhrbahn vorgesehen sind. Die Zufuhrbahn und die Speicherbahnen gemäß dieser bekannten Vorrichtung werden demnach wechselweise ausgebildet. Anders als bei der aus der DE 25 04 264 A1 bekannten Speichervorrichtung, ist bei der Speichervorrichtung gemäß der EP 1 144 285 B1 die Ausstoßrate der Produkte bei Normalbetrieb der Speichervorrichtung auch von der Geschwindigkeit der Speicherbahn abhängig.

Zwar bietet die aus der EP 1 144 285 B1 bekannte Vorrichtung den Vorteil, dass auch Betriebsschwankungen der vorgeordneten Arbeitsstation kurzfristig abgefangen werden können, jedoch ist die Steuerung dieser bekannten Speichervorrichtung aufwendig, da sich Speicher beidseitig der Zufuhrbahn bilden. Bei einer Speichervorrichtung mit beispielsweise zwei Zufuhrbahnen werden demzufolge drei unterschiedliche Speicher aufgebaut.

Kommt es nun zu einer Betriebsstörung bei dieser Speichervorrichtung, beispielsweise dadurch verursacht, dass in der Speicherbahn zwischen den zwei Zufuhrbahnen ein Produkt umgekippt worden ist, kann dieses nur unter erheblichem Aufwand wieder aufrecht gestellt werden. Da die Speicherbahn von den zwei Zufuhrbahnen eingeschlossen ist, ist der Zugang zu dem Speicher zwischen diesen zwei Zufuhrbahnen durch einen Arbeiter begrenzt. Da außerdem eine Vielzahl von Speichern abwechselnd zu den Zufuhrbahnen gemäß dieser bekannten Speichervorrichtung gebildet werden, ist die Überwachung der jeweiligen Speicher zum schnellen Erkennen und Beseitigen von Betriebsstörungen aufwändig.

Eine Speichervorrichtung die auf einem ähnlichen Konstruktionsprinzip wie die vorgenannte aus der EP 1 144 285 B1 bekannte Speichervorrichtung beruht, ist aus der EP 1 380 522 B1 bekannt. Auch bei der Speichervorrichtung gemäß der EP 1 380 522 B1 ist an beiden Seiten einer Zufuhrbahn eine Speicherbahn vorgesehen. Diese bekannte Speichervorrichtung ist demnach mit den gleichen Nachteilen wie die aus der EP 1 144 285 B1 bekannte Speichervorrichtung behaftet.

Aus der US 4 361 759 A ist ferner ein Speicherverfahren mit den Merkmalen des Oberbegriffs des Anspruchs 1 bekannt, aus der EP 1380522 B1 ein Speicherverfahren mit den Merkmalen des Oberbegriffs des Anspruchs 5.

Die JP 2001 240238 A beschreibt eine Speichervorrichtung, bei der einlaufende Produkte mittels einer Weiche im Eingangsbereich der Speichervorrichtung auf Speicherbahnen umgelenkt werden können. Alternativ lassen sich die Produkte im Normalbetrieb geradlinig vom Eingang der Speichervorrichtung bis zu deren Ausgang durchleiten. Die auf den Speicherbahnen gespeicherten Produkte lassen sich mittels einer Speicherbahnführung seitlich ablenken und am Ende der Speicherbahnführung unter Niederdruckbedingungen auf Abförderbänder übergeben. Die Produkte werden mit den Abförderbändern an einer Ablenkschiene entlang geführt und in einen einreihigen Produktstrom zur Ausleitung umgewandelt

Unter Berücksichtigung der vorgenannten gattungsbildenden Speichervorrichtungen ist es eine Aufgabe der vorliegenden Erfindung, eine Speichervorrichtung bereitzustellen, welche ein einfaches Speichern der Produkte und eine einfache Steuerung der Speicher ermöglicht. Außerdem ist es eine Aufgabe der vorliegenden Erfindung ein Verfahren zum Speichern und Befördern von Produkten bereitzustellen, welches ebenfalls eine einfache Speicherung der Produkte und einfache Steuerung der Speicher ermöglicht.

Die der Erfindung zugrundeliegenden Aufgaben werden erfindungsgemäß durch ein Verfahren mit den Merkmalen von Anspruch 1 gelöst.

Die durch das erfindungsgemäße Verfahren beförderten Produkte sind beispielsweise aufrechtstehende Gefäße, wie beispielsweise Getränkeflaschen oder Getränkedosen. Gemäß der Erfindung werden bei Speicherbetrieb die Produkte auf die erste Speicherbahn und auf eine unmittelbar benachbart zu dieser angeordneten zweiten Speicherbahn überführt. Demzufolge baut sich der Speicher lediglich auf einer Seite der Zufuhrbahn auf. Dies bringt den Vorteil mit sich, dass die Steuerung und Überwachung des Speichers wesentlich vereinfacht wird. Der Zugang zu dem Speicher ist stets gegeben, da dieser nicht zwischen mehreren Zufuhrbahnen eingeschlossen ist. Als Zufuhrbahn im Sinne der Erfindung wird jede Bahn angesehen, welche die Produkte über einen Einlass in die Speichervorrichtung einführt.

Die Produkte verlassen, bei Normalbetrieb und beim Entspeichern, in einer ersten Seitwärtsbewegung in der Bewegungsrichtung hinteren Hälfte der Speichervorrichtung die Zufuhrbahn und werden in einer zweiten Seitwärtsbewegung, die der ersten Seitwärtsbewegung entgegengesetzt ist, in Richtung des Auslasses befördert. Hierdurch wird die Abförderung der Produkte verbessert. Unter dem Begriff Seitwärtsbewegung ist jede Bewegung zu verstehen, welche nicht in Richtung der Längsachse der Speichervorrichtung verläuft. Die erste Seitwärtsbewegung wird in der hinteren Hälfte der Speichervorrichtung durchgeführt. Die über die Zufuhrbahn in die Speichervorrichtung eingeführten Produkte werden demnach über eine relativ lange Strecke geradlinig durch die

Zufuhrbahn bewegt. Hierdurch wird das Einführen der Produkte in die Speichervorrichtung optimiert, da sich durch diese relativ lange geradlinige Bewegung der Produkte eine relativ hohe Zufuhrbahngeschwindigkeit einstellen lässt. Die zweite Seitwärtsbewegung ist der ersten Seitwärtsbewegung entgegengesetzt. Die Produkte werden demnach wenigstens zweimal zwischen dem Einlass und dem Auslass der Speichervorrichtung umgelenkt, bevor sie die Speichervorrichtung verlassen. Dies bringt den Vorteil mit sich, dass die Oberflächen der Bahnen optimal genutzt werde und somit nur ein geringer Bereich für diese doppelte Umlenkung erforderlich ist.

Gemäß einer bevorzugten Ausführungsform des Verfahrens gemäß der Erfindung werden die Produkte bei Normalbetrieb der Speichervorrichtung zunächst von der Zufuhrbahn auf die neben der Zufuhrbahn angeordnete Speicherbahn und von dort auf eine stromabwärts der Zufuhrbahn angeordnete Abförderbahn überführt und über diese Abförderbahn zu dem Auslass befördert. Die zwei entgegengesetzten Seitwärtsbewegungen werden demnach zwischen der Zufuhrbahn und der Abförderbahn durchgeführt. Hierdurch wird die Abförderung der Produkte weiterhin verbessert.

Gemäß einer weiteren bevorzugten Ausführungsform der erfindungsgemäßen Verfahren werden die Produkte in der zweiten Seitwärtsbewegung zumindest so weit befördert, dass sie in Verlängerung der Zufuhrbahn die Speichervorrichtung verlassen. Bei dieser bevorzugten Ausführungsform ist der durch die zweite Seitwärtsbewegung zurückgelegte Weg der Produkte wenigstens genauso lang wie der durch die erste Seitwärtsbewegung der Produkte zurückgelegte Weg.

Gemäß einer weiteren bevorzugten Ausführungsform der erfindungsgemäßen Verfahren verlassen die Produkte die Speichervorrichtung auf einer der neben der Zufuhrbahn angeordneten Speicherbahn gegenüberliegenden Seite der Zufuhrbahn. Gemäß dieser bevorzugten Ausführungsform ist der durch die zweite Seitwärtsbewegung zurückgelegte Weg der Produkte länger als der durch die erste Seitwärtsbewegung der Produkte zurückgelegte Weg. Hierdurch wird die Anpassungsfähigkeit der Speichervorrichtung an Geschwindigkeitsschwankungen bei der nachgeordneten Arbeitsstation weiterhin erhöht.

Die der Erfindung zugrundeliegenden Aufgaben werden erfindungsgemäß außerdem durch ein Verfahren mit den Merkmalen von Anspruch 5 gelöst. Dabei verlassen die Produkte in einer ersten Seitwärtsbewegung in der Bewegungsrichtung hinteren Hälfte der Speichervorrichtung die Zufuhrbahn und werden in einer zweiten Seitwärtsbewegung, die in dieselbe Richtung wie die erste Seitwärtsbewegung erfolgt, in Richtung des Auslasses befördert. Gemäß dieser bevorzugten Ausführungsform erfolgen sowohl die erste als auch die zweite Seitwärtsbewegung in dieselbe Richtung. Dies bringt den Vorteil mit sich, dass die Ausstoßgeschwindigkeit der Produkte aus der Speichervorrichtung optimiert werden kann. Außerdem werden die Produkte beim Entspeichern von der zweiten Speicherbahn über eine Speicherbahn-Führung auf die erste Speicherbahn umgelenkt. Dadurch wird das Ausstoßen der Produkte verbessert.

Das zugrundeliegende Problem wird ferner mit einer Vorrichtung mit den Merkmalen von Anspruch 9 gelöst.

Das der Erfindung zugrundeliegende vorrichtungsgemäße Problem wird mit einer Vorrichtung mit den Merkmalen von Anspruch 6 gelöst. Bei der erfindungsgemäßen Vorrichtung ist die zweite Speicherbahn unmittelbar benachbart zu der ersten Speicherbahn vorgesehen. Der Aufbau der Speichervorrichtung wird hierdurch wesentlich vereinfacht, da die Speicherbahnen lediglich an einer Seite der Zufuhrbahn ausgebildet sind. Unmittelbar benachbart im Sinne der Erfindung ist derart zu verstehen, dass zwischen zwei Speicherbahnen keine weitere Bahn, wie beispielsweise eine Zufuhrbahn vorgesehen ist. Demzufolge sind bei der erfindungsgemäßen Speichervorrichtung alle Speicherbahnen an ein und derselben Seite relativ zu der Zufuhrbahn ausgebildet. Hierdurch wird insbesondere die Raumnutzung optimiert, wodurch eine relativ kompakte Speichervorrichtung bereitgestellt werden kann.

Als Speicherbahn im Sinne der Erfindung wird jede Bahn angesehen, welche in der Lage ist, die Produkte zwischen einer Zufuhrbahn und einer Abförderbahn vorübergehend zu Speichern.

Eine Bahn der Speichervorrichtung kann beispielsweise durch mehrere Förderbänder aufgebaut werden. Demnach kann beispielsweise die Zufuhrbahn durch mehrere Zufuhrbänder gebildet sein. Außerdem können die jeweiligen Bänder einer Bahn unter unterschiedlichen Geschwindigkeiten betrieben werden.

Ferner ist stromabwärts einer Speicherbahn-Führung in Längserstreckung der Zufuhrbahn und neben der ersten Speicherbahn eine Abförderbahn vorgesehen. Als Abförderbahn im Sinne der Erfindung wird eine Bahn angesehen, welche die Produkte aus der Speichervorrichtung ausstößt. Demnach ist eine Abförderbahn im Sinne der Erfindung unmittelbar mit einem Auslass der Speichervorrichtung verbunden. Eine Abförderbahn kann in mehrere Abförderbänder unterteilt sein, welche unter unterschiedlichen Abförderbandgeschwindigkeiten betrieben werden können. Falls die Abförderbahn in mehrere Abförderbänder unterteilt ist, ergibt sich die Abförderbahngeschwindigkeit durch den Mittelwert der Geschwindigkeiten der jeweiligen Abförderbänder. Die Abförderbahngeschwindigkeit entspricht beispielsweise der Geschwindigkeit einer der Speichervorrichtung nachgeordneten Arbeitsstation, die unmittelbar am Auslass der Speichervorrichtung angeordnet ist.

Gemäß einer bevorzugten Weiterbildung der vorliegenden Erfindung sind bei Speicherbetrieb der Speichervorrichtung die Speicherbahnen und die Zufuhrbahn derart steuerbar, dass sie die Ungleichheiten $V_{S1} > V_{S2}$ und $V_Z > V_{S1}$ erfüllen, wobei $V_{S1}$ = Speicherbahngeschwindigkeit der ersten Speicherbahn; $V_{S2}$ = Speicherbahngeschwindigkeit der zweiten Speicherbahn; und $v_Z$ = Zufuhrgeschwindigkeit der Zufuhrbahn ist. Hierdurch wird eine flexible Steuerung des Speichers erzielt.

Gemäß einer weiteren bevorzugten Weiterbildung der vorliegenden Erfindung sind bei Entspeicherbetrieb der Speichervorrichtung die Speicherbahnen und die Zufuhrbahn derart steuerbar, dass sie die Ungleichheiten $v_{S1} > v_Z$ und $v_Z > v_{S2}$ erfüllen. Hierdurch wird die Steuerung des Speichers während des Entspeicherbetriebs optimiert und dieser kann demzufolge optimal abgebaut werden.

Weitere bevorzugte Ausführungsformen der vorliegenden Erfindung ergeben sich aus den Unteransprüchen.

Weitere Einzelheiten, Vorteile und Merkmale ergeben sich aus der folgenden Beschreibung von Ausführungsbeispielen in Verbindung mit der Zeichnung. In dieser Zeichnung zeigen:

Fig. 1        eine Draufsicht eines ersten Ausführungsbeispiels der Speichervorrichtung;

Fig. 2        den Bewegungspfad der Produkte bei Normalbetrieb der Speichervorrichtung nach Fig. 1;

Fig. 3 bis 6   den Fluss der Produkte bei Speicherbetrieb der Speichervorrichtung gemäß Fig. 1;

Fig. 7 und 8   den Fluss der Produkte bei Entspeicherbetrieb der Speichervorrichtung gemäß Fig. 1; und

Fig. 9        eine Draufsicht eines zweiten Ausführungsbeispiels der Speichervorrichtung.

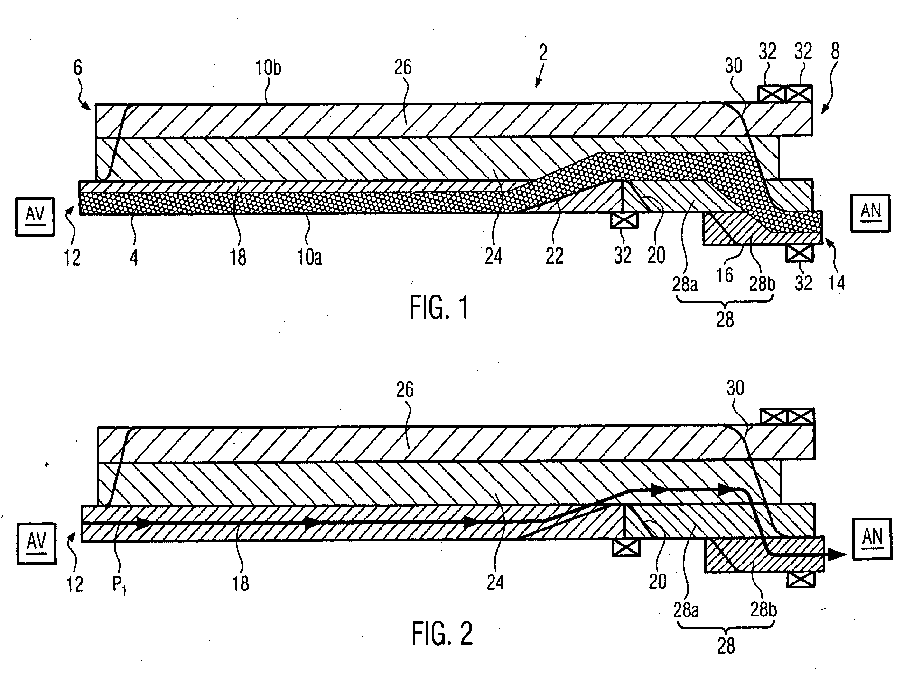

Fig. 1 zeigt eine Niederdruck-Speichervorrichtung 2 in welcher Flaschen 4 gespeichert werden können, wobei die Speichervorrichtung 2 zwischen einer vorgeordneten Arbeitsstation AV und einer nachgeordneten Arbeitsstation AN angeordnet ist. Die Speichervorrichtung 2 hat ein erstes Ende 6, ein zweites Ende 8 und zwei sich gegenüberliegende Längsseiten 10a, 10b. Ein seitlicher Einlass 12 ist benachbart zu der Längsseite 10a an dem ersten Ende 6 ausgebildet. An dem zweiten Ende 8 ist ein seitlicher Auslass 14 benachbart zu einer Seitenwand 16 ausgebildet. Die Seitenwand 16 ist parallel zu der Längsseite 10a und versetzt zu der Längsachse der Längsseite 10a angeordnet.

Eine Zufuhrbahn 18 erstreckt sich zwischen dem Einlass 12 und einer Speicherbahn-Führung 20. Die Speicherbahn-Führung 20 hat bei Draufsicht eine invertierte U-förmige Form mit einem langgezogenen Schenkel 22. Der Schenkel 22 ist mit seinem einen Ende mit der Längsseite 10a verbunden und bildet eine Führungsfläche aus. Das andere Ende des Schenkels 22 endet im Bereich einer ersten Speicherbahn 24. Diese erste Speicherbahn 24 ist unmittelbar benachbart zu der Zufuhrbahn 18 angeordnet. Benachbart zu dieser ersten Speicherbahn 24 ist eine zweite Speicherbahn 26 vorgesehen.

Stromabwärts der Zufuhrbahn 18 und in Längserstreckung dazu ist eine Abförderbahn 28 ausgebildet, die in ein erstes Abförderband 28a und ein zweites Abförderband 28b unterteilt ist. Das zweite Abförderband 28b ist unmittelbar benachbart zu der Seitenwand 16 angeordnet.

Am Ende der Speicherbahnen 24, 26 und des Abförderbandes 28a ist eine Auslass-Führung 30 ausgebildet. Diese Auslass-Führung 30 erstreckt sich von der zweiten Längsseite 10b über die zweite Speicherbahn 26, die erste Speicherbahn 24 und das erste Abförderband 28a bis hin zu dem zweiten Abförderband 28b. Der Auslass 14 wird durch die Auslass-Führung 30 und die Seitenwand 16 gebildet.

Zum Antreiben der Bahnen und Bänder unabhängig voneinander, sind mehrere Antriebe 32 vorgesehen. Die Bahnen 18, 24, 26, 28 werden derart angetrieben, dass deren Geschwindigkeiten variierbar sind.

Nachfolgend wird die Wirkungsweise der Vorrichtung 2 beschrieben.

Fig. 2 zeigt den Bewegungspfad $P_1$ der Flaschen 4 durch die Speichervorrichtung 2 bei Normalbetrieb. Normalbetrieb bezeichnet insbesondere den Zustand, bei welchem die vorgeordnete Arbeitsstation AV als auch die nachgeordnete Arbeitsstation AN gemäß ihren jeweiligen Normalgeschwindigkeiten betrieben werden.

Fig. 2 zeigt, dass bei Normalbetrieb die Flaschen 4 durch die Zufuhrbahn 18 in die Speichervorrichtung 2 an dem Einlass 12 eingeführt und bis zu der Speicherbahn-Führung 20 durch die Zufuhrbahn 18 geradlinig bewegt werden. Beim Erreichen der Speicherbahn-Führung 20 werden die Flaschen 4 seitwärts bewegt, d.h. sie werden abweichend von der Längserstreckung der Speichervorrichtung 2 bewegt. Diese Seitwärtsbewegung schreitet fort, bis die Flaschen 4 auf die erste Speicherbahn 24 umgeführt worden sind. Durch die erste Speicherbahn 24 werden die Flaschen 4 dann geradlinig bis zu der Auslass-Führung 30 bewegt. An der Auslass-Führung 30 werden die Flaschen 4 dann erneut seitwärts bewegt. Diese zweite Seitwärtsbewegung ist jedoch der ersten Seitwärtsbewegung entgegengesetzt. Die zweite Seitwärtsbewegung schreitet fort, bis die Flaschen 4 auf das zweite Abförderband 28b überführt worden sind. Die Flaschen 4 werden dann von diesem zweiten Abförderband 28b geradlinig zu der nachgeordneten Arbeitsstation AN befördert.

Während des oben beschriebenen Normalbetriebs der Speichervorrichtung 2 entspricht die Zufuhrbahngeschwindigkeit $v_Z$ der Speicherbahngeschwindigkeit $v_{S1}$ der ersten Speicherbahn 24. Die Abförderbandgeschwindigkeit $v_{A1}$ des ersten Abförderbandes 28a ist gleich oder größer als die Speicherbahngeschwindigkeit $v_{S1}$ und die Abförderbandgeschwindigkeit $v_{A2}$ des zweiten Abförderbandes 28b ist gleich oder größer als die Abförderbandgeschwindigkeit $v_{A1}$ des ersten Abförderbandes 28a, wobei die Abförderbandgeschwindigkeit $v_{A2}$ der Geschwindigkeit der nachgeordneten Arbeitsstation AN entspricht. Die zweite Speicherbahn 26 ist im Normalbetrieb nicht eingeschaltet, d.h. die Speicherbahngeschwindigkeit $V_{S2}$ der zweiten Speicherbahn 26 ist gleich Null.

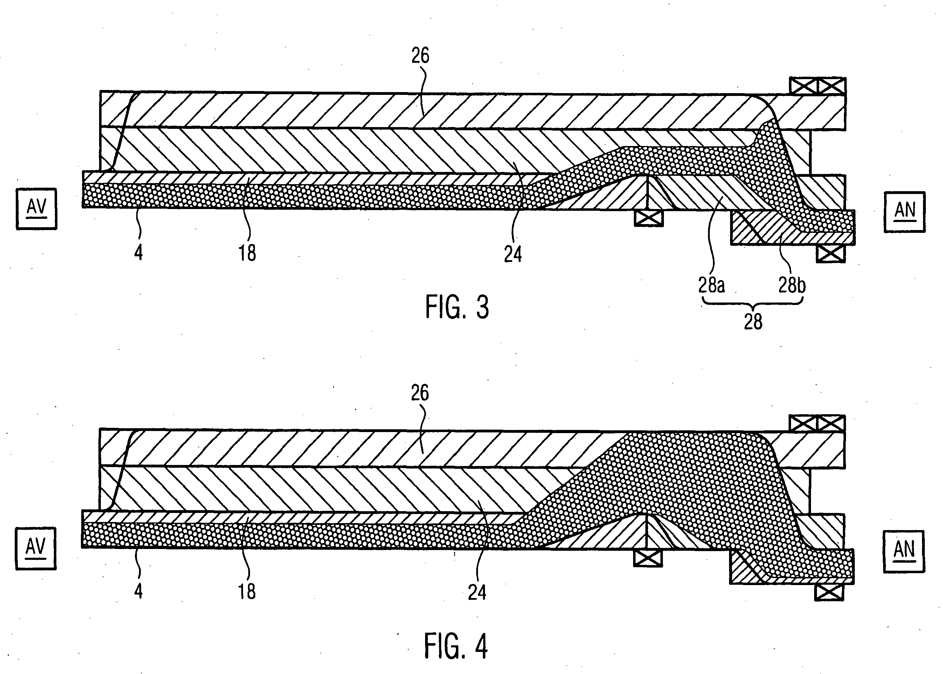

Fig. 3, 4, 5 und 6 zeigen den Fluss der Flaschen bei Speicherbetrieb der Speichervorrichtung 2. Im Falle einer Betriebsstörung der nachgeordneten Arbeitsstation AN werden die Flaschen 4 von der ersten Speicherbahn 24 auf die zweite Speicherbahn 26 gedrängt (vgl. Fig. 3). Während des Speicherbetriebs wird die zweite Speicherbahn 26 bei einer Speicherbahngeschwindigkeit $v_{S2}$ betrieben, die kleiner als die Speicherbahngeschwindigkeit $v_{S1}$ der ersten Speicherbahn 24 ist.

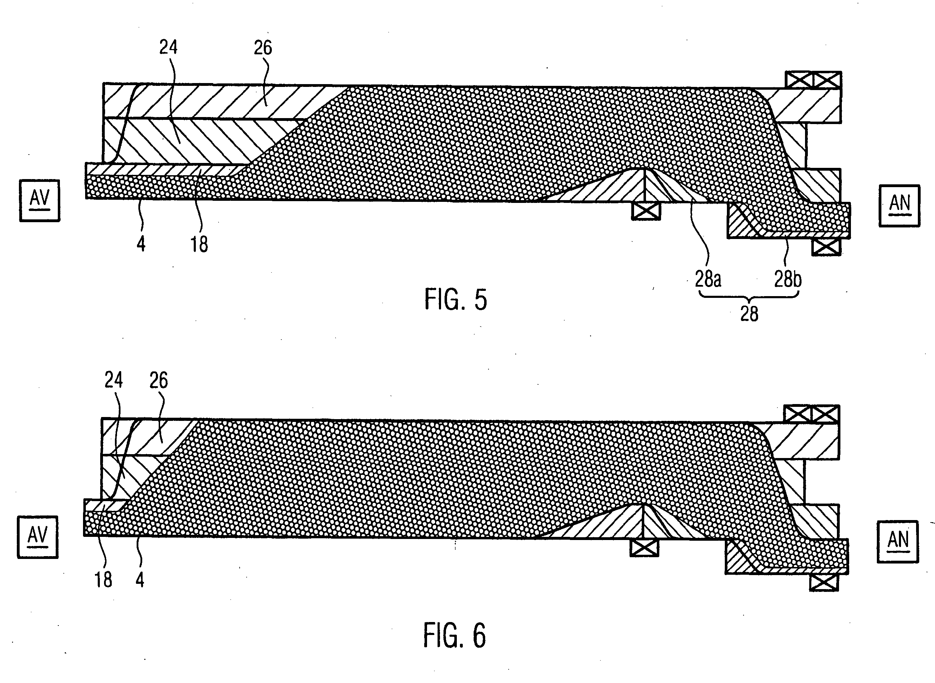

Bei anhaltender Betriebsstörung der nachgeordneten Arbeitsstation AN und kontinuierlichem Zufluss von weiteren Flaschen über die Zufuhrbahn 18 bildet sich ein Stau an dem zweiten Abförderband 28b und zwangsläufig an dem ersten Abförderband 28a. Gleichzeitig werden die Flaschen weiterhin auf die zweite Speicherbahn 26 umgeführt (vgl. Fig. 4). Der durch die erste Speicherbahn 24 und die zweite Speicherbahn 26 gebildete Speicher wird bei weiter anhaltender Betriebsstörung der nachgeordneten Arbeitsstation AN weiterhin gefüllt (vgl. Fig. 5 und 6).

Sobald die nachgeordnete Arbeitsstation AN wieder unter Normalbedingungen betrieben wird, beginnt der Entspeicherbetrieb der Speichervorrichtung 2.

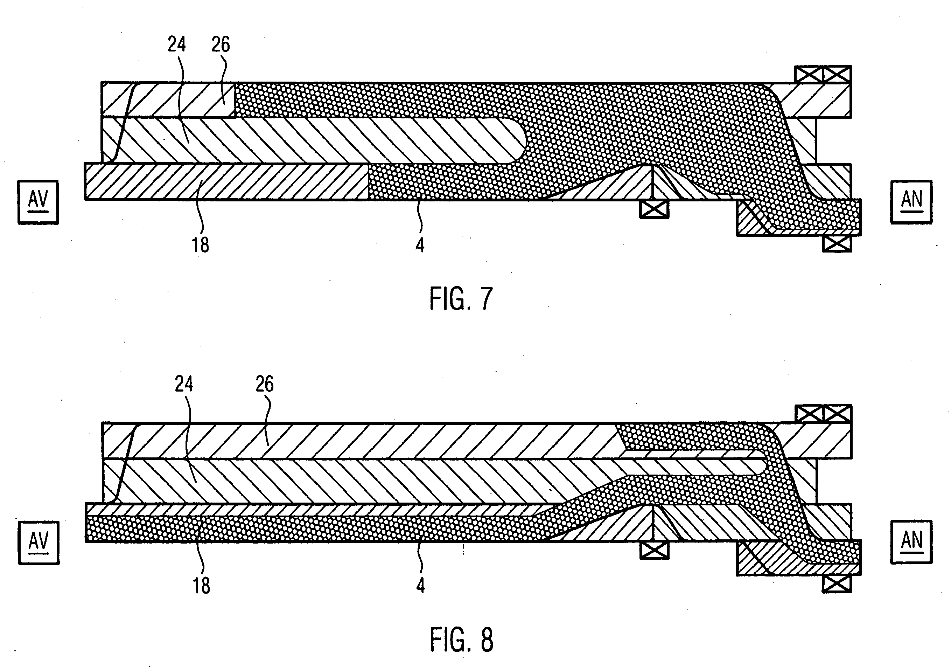

Beim Entspeicherbetrieb der Speichervorrichtung 2 werden die Bahnen derart betrieben, dass die Speicherbahngeschwindigkeit $v_{S1}$ der ersten Speicherbahn 24 größer als die Zufuhrgeschwindigkeit $v_Z$ der Zufuhrbahn 18 ist. Die Zufuhrgeschwindigkeit $v_Z$ ist jedoch höher als die Speicherbahngeschwindigkeit $v_{S2}$ der zweiten Speicherbahn 26. Gleichzeitig ist die Abförderbandgeschwindigkeit $v_{A1}$ des ersten Abförderbandes 28a höher als die Speicherbahngeschwindigkeit $v_{S1}$ und die Abförderbandgeschwindigkeit $v_{A2}$ des zweiten Abförderbandes 28b ist höher als die Abförderbandgeschwindigkeit $v_{A1}$. Hierdurch wird der Speicher allmählich geleert (vgl. Fig. 7). Aus Fig. 7 ist erkennbar, dass der Speicher zuerst im Bereich der ersten Speicherbahn 24 geleert wird. Bei fortschreitender Entleerung des Speichers wird der Zustand wie in Fig. 8 gezeigt erreicht. Sobald keine Flaschen 4 mehr durch die zweite Speicherbahn 26 gespeichert werden, und somit der Normalbetrieb der Speichervorrichtung 2 erreicht worden ist, wird die Geschwindigkeit $v_{s2}$ der zweiten Speicherbahn 26 heruntergeregelt.

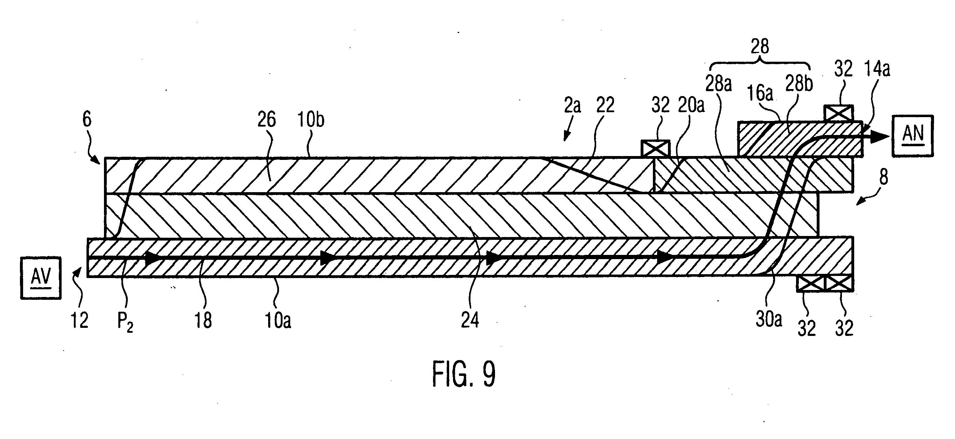

Fig. 9 zeigt ein zweites Ausführungsbeispiel einer Speichervorrichtung. Die Speichervorrichtung 2a hat ebenfalls ein erstes Ende 6, ein zweites Ende 8 und zwei sich gegenüberliegende Längsseiten 10a, 10b, wobei ein seitlicher Einlass 12 benachbart zu der Längsseite 10a ausgebildet ist.

Eine Zufuhrbahn 18 erstreckt sich zwischen dem Einlass 12 und einer Auslass-Führung 30a. Eine erste Speicherbahn 24 ist unmittelbar benachbart zu der Zufuhrbahn 18 vorgesehen. Benachbart zu dieser ersten Speicherbahn 24 ist eine zweite Speicherbahn 26 ausgebildet. Am stromabwärts liegenden Ende der zweiten Speicherbahn 26 ist eine Speicherbahn-Führung 20a ausgebildet, die eine invertierte U-förmige Form mit einem langgezogenen Schenkel 22 aufweist. Der Schenkel 22 ist mit seinem einen Ende mit der Längsseite 10b verbunden und bildet eine Führungsfläche aus. Das andere Ende des Schenkels 22 endet im Bereich der ersten Speicherbahn 24.

Stromabwärts der zweiten Speicherbahn 26 und in Längserstreckung dazu ist eine Abförderbahn 28 ausgebildet, die in erstes Abförderband 28a und ein zweites Abförderband 28b unterteilt ist. Das zweite Abförderband 28b ist unmittelbar benachbart zu der Seitenwand 16a angeordnet.

Bei dieser Speichervorrichtung 2a ist demnach die Auslass-Führung 30a am Ende der Zufuhrbahn 18, der ersten Speicherbahn 24 und des Abförderbandes 28a ausgebildet. Die Auslass-Führung 30a erstreckt sich von der ersten Längsseite 10a über die Zufuhrbahn 18, die erste Speicherbahn 24 und das erste Abförderband 28a bis hin zu dem zweiten Abförderband 28b, so dass der Auslass 14a durch die Auslass-Führung 30 und die Seitenwand 16a gebildet wird.

Nachfolgend wird die Wirkungsweise der Vorrichtung 2a beschrieben.

Der Bewegungspfad $P_2$ zeigt den Pfad der Flaschen durch die Speichervorrichtung 2a bei Normalbetrieb an. Demnach werden die Flaschen durch die Zufuhrbahn 18 in die Speichervorrichtung 2 an dem Einlass 12 eingeführt und bis zur Auslass-Führung 30a durch die Zufuhrbahn 18 geradlinig bewegt. Beim Erreichen der Auslass-Führung 30a werden die Flaschen seitwärts bewegt. Diese Seitwärtsbewegung schreitet fort, bis die Flaschen auf das zweite Abförderband 28b über die erste Speicherbahn 24 und das erste Abförderband 28a umgeführt worden sind. Die Flaschen werden dann von diesem zweiten Abförderband 28b geradlinig zu der nachgeordneten Arbeitsstation AN befördert.

Die Geschwindigkeiten der verschiedenen Bahnen während des Normalbetriebs der Speichervorrichtung 2a verhalten sich ähnlich wie die Geschwindigkeiten der Bahnen der Speichervorrichtung 2 gemäß dem ersten Ausführungsbeispiel.

Im Falle einer Betriebsstörung der nachgeordneten Arbeitsstation AN werden die Flaschen von der ersten Speicherbahn 24 auf die zweite Speicherbahn 26 gedrängt.

Sobald die nachgeordnete Arbeitsstation AN wieder unter Normalbedingungen betrieben wird, beginnt der Entspeicherbetrieb der Speichervorrichtung 2a.

Beim Entspeichern der Speichervorrichtung 2a werden die Flaschen von der zweiten Speicherbahn 26 über die Speicherbahn-Führung 20a auf die erste Speicherbahn 24 umgelenkt. Diese Flaschen werden dann über die erste Speicherbahn 26 geradlinig bis zur Auslass-Führung 30a überführt und durch die Auslass-Führung 30a auf die Abförderbahn 28 umgelenkt. Sobald keine Flaschen mehr auf der zweiten Speicherbahn 26 gespeichert werden, und somit der Normalbetrieb der Speichervorrichtung 2a erreicht worden ist, wird die Geschwindigkeit $v_{S2}$ der zweiten Speicherbahn 26 heruntergeregelt. Ähnlich wie bei der Speichervorrichtung 2 gemäß dem ersten Ausführungsbeispiel wird die zweite Speicherbahn 26 auch bei der Speichervorrichtung 2a während des Normalbetriebs bei einer im Vergleich zu der Geschwindigkeit während des Entspeicherbetriebs niedrigeren Geschwindigkeit betrieben.

**Bezugszeichenliste**

| | |
|---|---|
| 2, 2a | Speichervorrichtung |
| 4 | Flaschen |
| 6 | erstes Ende |
| 8 | zweites Ende |
| 10a, 10b | Längsseiten |
| 12 | Einlass |
| 14, 14a | Auslass |
| 16, 16a | Seitenwand |
| 18 | Zufuhrbahn |
| 20, 20a | Speicherbahn-Führung |
| 22 | Schenkel |
| 24 | erste Speicherbahn |
| 26 | zweite Speicherbahn |
| 28 | Abförderbahn |
| 28a, 28b | erstes und zweites Abförderband |
| 30, 30a | Auslass-Führung |
| 32 | Antriebe |
| $v_{S1}$ | Speicherbahngeschwindigkeit der ersten Speicherbahn 24 |
| $v_{S2}$ | Speicherbahngeschwindigkeit der zweiten Speicherbahn 26 |
| $v_Z$ | Zufuhrbahngeschwindigkeit der Zufuhrbahn 18 |

$v_{A1}$      Abförderbandgeschwindigkeit des ersten Abförderbandes 28a
$v_{A2}$      Abförderbandgeschwindigkeit des zweiten Abförderbandes 28b
$P_1, P_2$      Bewegungspfad der Flaschen 4
AV      vorgeordnete Arbeitsstation
AN      nachgeordnete Arbeitsstation

## Patentansprüche

1. Verfahren zum Speichern und Befördern von Produkten (4) in einer Niederdruck-Speichervorrichtung (2), welches die Schritte umfasst:

   Einführen der Produkte (4) in die Speichervorrichtung (2) an einem ersten, einen Einlass (12) aufweisenden Ende (6) der Speichervorrichtung (2) mittels einer Zufuhrbahn (18),
   Befördern der Produkte (4) in Richtung eines zweiten, einen Auslass (14) aufweisendes Endes (8) der Speichervorrichtung (2), und
   Überführen der Produkte (4) auf eine benachbart zu der Zufuhrbahn (18) angeordnete erste Speicherbahn (24), wobei die Produkte (4) abhängig von der Speicherbahngeschwindigkeit ($v_{S1}$) der ersten Speicherbahn (24) zu einem Auslass (14) der Speichervorrichtung (2) befördert und bei Speicherbetrieb der Speichervorrichtung (2) auf die erste Speicherbahn (24) und auf eine unmittelbar benachbart zu dieser angeordneten zweiten Speicherbahn (26) überführt werden,
   **dadurch gekennzeichnet, dass**
   die Produkte (4) bei Normalbetrieb, beim Speichern und beim Entspeichern der Speichervorrichtung (2) in einer ersten Seitwärtsbewegung in der Bewegungsrichtung hinteren Hälfte der Speichervorrichtung (2) die Zufuhrbahn (18) verlassen und in einer zweiten Seitwärtsbewegung, die der ersten Seitwärtsbewegung entgegengesetzt ist, in Richtung des Auslasses (14) befördert werden.

2. Verfahren nach Anspruch 1, **dadurch gekennzeichnet, dass** die Produkte (4) bei Normalbetrieb der Speichervorrichtung (2) zunächst von der Zufuhrbahn (18) auf die neben der Zufuhrbahn angeordnete Speicherbahn (24) und von dort auf eine stromabwärts der Zufuhrbahn (18) angeordnete Abförderbahn (28) überführt und über diese Abförderbahn (28) zu dem Auslass (14) befördert werden.

3. Verfahren nach einem der Ansprüche 1 oder 2, **dadurch gekennzeichnet, dass** die Produkte (4) in der zweiten Seitwärtsbewegung zumindest so weit befördert werden, dass sie in Verlängerung der Zufuhrbahn (18) die Speichervorrichtung (2) verlassen.

4. Verfahren nach Anspruch 3, **dadurch gekennzeichnet, dass** die Produkte (4) auf einer der neben der Zufuhrbahn (18) angeordneten Speicherbahn (24) gegenüberliegenden Seite der Zufuhrbahn (18) die Speichervorrichtung (2) verlassen.

5. Verfahren zum Speichern und Befördern von Produkten (4) in einer Niederdruck-Speichervorrichtung (2a), welches die Schritte umfasst:

   Einführen der Produkte (4) in die Speichervorrichtung (2a) an einem ersten, einen Einlass (12) aufweisenden Ende (6) der Speichervorrichtung (2a) mittels einer Zufuhrbahn (18),
   Befördern der Produkte (4) in Richtung eines zweiten, einen Auslass (14) aufweisendes Endes (8) der Speichervorrichtung (2a), und
   Überführen der Produkte (4) auf eine benachbart zu der Zufuhrbahn (18) angeordnete erste Speicherbahn (24), wobei die Produkte (4) abhängig von der Speicherbahngeschwindigkeit ($v_{s1}$) der ersten Speicherbahn (24) zu einem Auslass (14) der Speichervorrichtung (2) befördert und bei Speicherbetrieb der Speichervorrichtung (2a) auf die erste Speicherbahn (24) und auf eine unmittelbar benachbart zu dieser angeordneten zweiten Speicherbahn (26) überführt werden und
   wobei die Produkte (4) in einer ersten Seitwärtsbewegung in der Bewegungsrichtung hinteren Hälfte der Speichervorrichtung (2) die Zufuhrbahn (18) verlassen und in einer zweiten Seitwärtsbewegung, die in dieselbe Richtung wie die erste Seitwärtsbewegung erfolgt, in Richtung des Auslasses (14) befördert werden,
   **dadurch gekennzeichnet, dass**
   die Produkte (4) bei Normalbetrieb der Speichervorrichtung (2a) zunächst von der Zufuhrbahn (18) auf die erste Speicherbahn (24) und von dort auf eine stromabwärts der zweiten Speicherbahn (26) und in Längserstreckung dazu angeordnete Abförderbahn (28) überführt und über diese Abförderbahn (28) zu dem Auslass (14) befördert werden; und

die Produkte (4) beim Entspeichern der Speichervorrichtung (2a) von der zweiten Speicherbahn (26) über eine Speicherbahnführung (20a) auf die erste Speicherbahn (24) umgelenkt werden.

6. Niederdruck-Speichervorrichtung (2) zum Speichern von Produkten (4), umfassend:

einen Rahmen mit einem ersten Ende (6), einem zweiten Ende (8) und zwei sich gegenüberliegenden Längsseiten (10a, 10b),
einen Einlass (12), der am ersten Ende (6) ausgebildet ist,
einen Auslass (14), der am zweiten Ende (8) ausgebildet ist,
wenigstens eine Zufuhrbahn (18), die die Produkte (4) am ersten Ende (6) in die Speichervorrichtung (2) einführt und in Richtung des zweiten Endes (8) unter einer regelbaren Zufuhrgeschwindigkeit ($v_z$) befördert,
wenigstens eine erste und eine zweite Speicherbahn (24, 26), deren Speicherbahngeschwindigkeit ($v_{S1}$, $v_{S2}$) veränderlich sind,
wobei die erste Speicherbahn (24) derart neben der Zufuhrbahn (18) ausgebildet ist,
dass die Produkte (4) abhängig von der Speicherbahngeschwindigkeit ($v_{S1}$) der ersten Speicherbahn (24) zu dem Auslass (14) beförderbar sind,
wobei die zweite Speicherbahn (26) unmittelbar benachbart zu der ersten Speicherbahn (24) vorgesehen ist, und
wobei am Ende der Speicherbahnen (24, 26) eine Auslass-Führung (30) vorgesehen ist,
die die Produkte (4) zum dem Auslass (14) führt,
**dadurch gekennzeichnet, dass**
eine Speicherbahn-Führung (20), die die Produkte (4) in der in der Bewegungsrichtung hinteren Hälfte der Speichervorrichtung (2) von der Zufuhrbahn (18) auf die erste Speicherbahn (24) überführt, vorgesehen ist; und stromabwärts der Speicherbahn-Führung (20) in Längserstreckung der Zufuhrbahn (18) und neben der ersten Speicherbahn (24) eine Abförderbahn (28) vorgesehen ist.

7. Niederdruck-Speichervorrichtung (2) nach Anspruch 6, **dadurch gekennzeichnet, dass** bei Normalbetrieb der Vorrichtung (2) die Produkte (4) abhängig von der Zufuhrgeschwindigkeit ($v_z$) der Zufuhrbahn (18) und der Speicherbahngeschwindigkeit ($v_{S1}$) der ersten Speicherbahn (24) zum dem Auslass (14) beförderbar sind.

8. Niederdruck-Speichervorrichtung (2) nach Anspruch 6 oder 7, **dadurch gekennzeichnet, dass** der Einlass (12) seitlich benachbart zu einer der Längsseiten (10a) vorgesehen ist.

9. Niederdruck-Speichervorrichtung (2a) zum Speichern von Produkten (4), umfassend:

einen Rahmen mit einem ersten Ende (6), einem zweiten Ende (8) und zwei sich gegenüberliegenden Längsseiten (10a, 10b),
einen Einlass (12), der am ersten Ende (6) ausgebildet ist,
einen Auslass (14), der am zweiten Ende (8) ausgebildet ist,
wenigstens eine Zufuhrbahn (18), die die Produkte (4) am ersten Ende (6) in die Speichervorrichtung (2) einführt und in Richtung des zweiten Endes (8) unter einer regelbaren Zufuhrgeschwindigkeit ($v_z$) befördert,
wenigstens eine erste und eine zweite Speicherbahn (24, 26), deren Speicherbahngeschwindigkeit ($v_{S1}$, $v_{S2}$) veränderlich sind,
wobei die erste Speicherbahn (24) derart neben der Zufuhrbahn (18) ausgebildet ist,
dass die Produkte (4) abhängig von der Speicherbahngeschwindigkeit ($v_{S1}$) der ersten Speicherbahn (24) zu dem Auslass (14) beförderbar sind,
wobei die zweite Speicherbahn (26) unmittelbar benachbart zu der ersten Speicherbahn (24) vorgesehen ist, und
wobei am Ende der Zufuhrbahn (18) und der ersten Speicherbahn (24) eine Auslass-Führung (30a) vorgesehen ist, die die Produkte (4) zu dem Auslass (14) führt,
**dadurch gekennzeichnet, dass**
eine Speicherbahn-Führung (20a), die die Produkte (4) von der zweiten Speicherbahn (26) auf die erste Speicherbahn (24) überführt, am stromabwärts liegenden Ende der zweiten Speicherbahn (26) vorgesehen ist, und
dass stromabwärts der Speicherbahn-Führung (20a) in Längserstreckung der zweiten Speicherbahn (26) und neben der ersten Speicherbahn (24) eine Abförderbahn (28) vorgesehen ist.

10. Niederdruck-Speichervorrichtung (2, 2a) nach Anspruch 6 oder 9, **dadurch gekennzeichnet, dass** die Abförderbahngeschwindigkeit der Abförderbahn (28) unabhängig von der Speicherbahngeschwindigkeit ($v_{S1}$) der ersten Speicherbahn (24) stufenlos regelbar ist.

11. Niederdruck-Speichervorrichtung (2, 2a) nach Anspruch 10, **dadurch gekennzeichnet, dass** die Abförderbahn (28) in wenigstens zwei Abförderbändern (28a, 28b) unterteilt ist, die benachbart zu einander angeordnet sind.

12. Niederdruck-Speichervorrichtung (2, 2a) nach einem der Ansprüche 10 oder 11, **dadurch gekennzeichnet, dass** bei Normalbetrieb der Speichervorrichtung (2) die zwei Abförderbänder (28a, 28b) derart steuerbar sind, dass sie die folgenden Ungleichheiten (1) und (2) erfüllen:

$$v_{A1} \geq v_{S1} \qquad \qquad \text{...(1)}$$

$$v_{A2} \geq v_{A1} \qquad \qquad \text{...(2),}$$

wobei

$v_{A1}$ = Abförderbandgeschwindigkeit des ersten Abförderbandes (28a);
$v_{S1}$ = Speicherbahngeschwindigkeit der ersten Speicherbahn (24); und
$v_{A2}$ = Abförderbandgeschwindigkeit des zweiten Abförderbandes (28b).

13. Niederdruck-Speichervorrichtung (2, 2a) nach einem der Ansprüche 10 bis 12, **dadurch gekennzeichnet, dass** beim Entspeicherbetrieb der Speichervorrichtung (2) die Abförderbänder (28a, 28b) derart steuerbar sind, dass sie die folgenden Ungleichheiten (3) und (4) erfüllen:

$$v_{A2} > v_{A1} \qquad \qquad \text{..(3)}$$

$$v_{A1} > v_{S1} \qquad \qquad \text{..(4),}$$

wobei

$v_{A1}$ = Abförderbandgeschwindigkeit des ersten Abförderbandes (28a);
$v_{A2}$ = Abförderbandgeschwindigkeit des zweiten Abförderbandes (28b);und
$v_{S1}$ = Speicherbahngeschwindigkeit der ersten Speicherbahn (24).

14. Niederdruck-Speichervorrichtung (2, 2a) nach einem der Ansprüche 6 bis 13, **dadurch gekennzeichnet, dass** die Zufuhrgeschwindigkeit ($v_z$) der Zufuhrbahn (18) und die Speicherbahngeschwindigkeiten ($v_{S1}$, $v_{S2}$) der ersten und zweiten Speicherbahnen (24, 26) unabhängig voneinander stufenlos regelbar sind.

15. Niederdruck-Speichervorrichtung (2, 2a) nach einem der Ansprüche 6 bis 14, **dadurch gekennzeichnet, dass** bei Speicherbetrieb der Speichervorrichtung (2) die Bahnen (18, 24, 26) derart steuerbar sind, dass sie die folgenden Ungleichheiten (5) und (6) erfüllen:

$$v_{S1} > v_{S2} \qquad \qquad \text{...(5)}$$

$$v_z > v_{S1} \qquad \qquad \text{...(6)}$$

wobei

$v_{S1}$ = Speicherbahngeschwindigkeit der ersten Speicherbahn (24);
$v_{S2}$ = Speicherbahngeschwindigkeit der zweiten Speicherbahn (26); und
$v_Z$ = Zufuhrgeschwindigkeit der Zufuhrbahn (18).

**16.** Niederdruck-Speichervorrichtung (2, 2a) nach einem der Ansprüche 6 bis 15, **dadurch gekennzeichnet, dass** beim Entspeicherbetrieb der Speichervorrichtung (2) die Bahnen (18, 24, 26) derart steuerbar sind, dass sie die folgenden Ungleichheiten (7) und (8) erfüllen:

$$v_{S1} > v_Z \qquad \qquad ...(7)$$

$$v_Z > v_{S2} \qquad \qquad ...(8)$$

wobei

$v_{S1}$ = Speicherbahngeschwindigkeit der ersten Speicherbahn (24);
$v_{S2}$ = Speicherbahngeschwindigkeit der zweiten Speicherbahn (26); und
$v_Z$ = Zufuhrgeschwindigkeit der Zufuhrbahn (18).

**17.** Niederdruck-Speichervorrichtung (2) nach einem der Ansprüche 6 bis 16, **dadurch gekennzeichnet, dass** bei Normalbetrieb der Speichervorrichtung (2, 2a) die Bahnen (18, 24, 26) derart steuerbar sind, dass sie die folgenden Ungleichheiten (9) und (10) erfüllen:

$$v_Z \geq v_{S1} \qquad \qquad ...(9)$$

$$v_{S1} > v_{S2} \qquad \qquad ...(10)$$

wobei

$v_{S1}$ = Speicherbahngeschwindigkeit der ersten Speicherbahn (24);
$v_{S2}$ = Speicherbahngeschwindigkeit der zweiten Speicherbahn (26); und
$v_Z$ = Zufuhrgeschwindigkeit der Zufuhrbahn (18).

**18.** Niederdruck-Speichervorrichtung (2, 2a) nach einem der Ansprüche 6 bis 17, **dadurch gekennzeichnet, dass** jede Bahn (18, 24, 26) und jedes Band (28a, 28b) durch mehrere Förderbänder gebildet ist.

**19.** Niederdruck-Speichervorrichtung (2, 2a) nach Anspruch 18, **dadurch gekennzeichnet, dass** die mehreren Förderbänder jeweils unter unterschiedlichen Geschwindigkeiten antreibbar sind.

**Claims**

**1.** Method for storing and conveying products (4) in a low pressure storage device (2) which includes the following steps:

introduction of the products (4) into the storage device (2) by means of an infeed path (18) at a first end (6) of the storage device (2) having an inlet (12),
conveying the products (4) towards a second end (8) of the storage device (2) having an outlet (14), and
transferring the products (4) to a first storage path (24) arranged adjacent to the infeed path (18), wherein the products (4) are conveyed in response to the storage path speed ($v_{S1}$) of the first storage path (24) to an outlet (14) of the storage device (2) and during storage operation of the storage device (2), the products are transferred to the first storage path (24) and to a second storage path (26) arranged adjacent thereto.
**characterised in that**
during normal operation of the storage device (2), storage and removal from storage, the products (4) leave the infeed path (18) in a first sideways movement, in the half of the storage device (2) that is the rear one in the direction of movement, and are conveyed towards the outlet (14) in a second sideways movement which is counter to the first sideways movement.

2. Method according to claim 1, **characterised in that** the products (4) are transferred during normal operation of the storage device (2) firstly from the infeed path (18) to the storage path (24) arranged next to the infeed path and from there to a discharge path (28) arranged downstream of the infeed path (18) and conveyed via said discharge path (28) to the outlet (14).

3. Method according to claim 1 or 2, **characterised in that** the products (4) are conveyed in the second sideways movement at least so far that they leave the storage device (2) in an extension of the infeed path (18).

4. Method according to claim 3, **characterised in that** the products (4) leave the storage device (2) on an opposite side of the infeed path (18) on a storage path (24) arranged next to the infeed path (18).

5. Method for storing and conveying products (4) in a low pressure storage device (2a) which comprises the following steps:

   introducing the products (4) into the storage device (2a) by means of an infeed path (18) at a first end (6) of the storage device (2a) having an inlet (12),
   conveying the products (4) towards a second end of the storage device (2a) having an outlet (14), and transferring the products (4) to a first storage path (24) arranged adjacent to the infeed path (18),
   wherein the products (4) are conveyed in response to the storage path speed ($v_{S1}$) of the first storage path (24) to an outlet (14) of the storage device (2) and during operation of the storage device (2a) are transferred to the first storage path (24) and
   to a second storage path (26) arranged directly adjacent thereto and
   wherein the products (4) leave the infeed path (18) in a first lateral movement, in the half of the storage device (2) that is the rear one in the direction of movement, and are transported towards the outlet (14) in a second lateral movement in the same direction as the first sideways movement,
   **characterised in that**
   the products (4) are transferred during normal operation of the storage device (2a) firstly from the infeed path (18) to the first storage path (24) and from there to a discharge path (28) arranged downstream of the second storage path (26) and in longitudinal extension thereto and transported to the outlet (14) via said discharge path (28); and
   the products (4) are redirected, during removal from storage in the storage device (2a) from the second storage path (26) to the first storage path (24) via a storage path guide (20a).

6. Low pressure storage device (2) for storing products (4) comprising
   a frame having a first end (6), a second end (8) and two long sides opposite each other (10a, 10b),
   an inlet (12), which is configured on the first end (6),
   an outlet (14), which is configured on the second end (8),
   at least one infeed path (18), which introduces the products (4) into the storage device (2) at the first end (6) and conveys them towards the second end (8) at a controllable infeed speed ($v_z$),
   at least one first and one second storage path (24, 26) the storage path speeds ($v_{S1}$, $v_{S2}$) of which can be varied,
   wherein the first storage path (24) is configured next to the infeed path (18) such that the products (4) can be conveyed to the outlet (14) in response to the storage path speed ($v_{S1}$) of the first storage path (24),
   wherein the second storage path (26) is provided directly adjacent to the first storage path (24), and
   wherein an outlet guide (30) is provided at the end of the storage paths (24,26) which guides the products (4) to the outlet (14),
   **characterised in that**
   a storage path guide (20) is provided, which transfers the products (4), in the half of the storage device (2) that is the rear one in the direction of movement, from the infeed path (18) to the first storage path (24); and a discharge path (28) is provided downstream of the storage path guide (20) in a longitudinal extension of the infeed path (18) and next to the first storage path (24).

7. Low pressure storage device (2) according to claim 6, **characterised in that** during normal operation of the device (2) the products (4) can be conveyed to the outlet (14) in response to the infeed speed ($v_z$) of the infeed path (18) and the storage path speed ($v_{S1}$) of the first storage path (24).

8. Low pressure storage device (2) according to claim 6 or 7, **characterised in that** the outlet (12) is provided laterally adjacent to one of the long sides (10a).

9. Low pressure storage device (2a) for storing products (4) comprising:

   a frame having a first end (6), a second end (8) and two long sides opposite each other (10a, 10b),
   an outlet (12) which is configured on the first end (6),
   an outlet (14) which is configured on the second end (8),
   at least one infeed path (18), which introduces the products (4) into the storage device (2) at the first end (6) and conveys them towards the second end (8) at a controllable infeed speed ($v_z$),
   at least one first and one second storage path (24, 26), the storage path speeds of which ($v_{S1}$, $v_{S2}$) can be varied,
   wherein the first storage path (24) is configured next to the infeed path (18) such that the products (4) can be conveyed to the outlet (14) in response to the storage path speed ($v_{S1}$) of the first storage path (24),
   wherein the second storage path (26) is provided directly adjacent to the first storage path (24), and
   wherein an outlet guide (30a) is provided at the end of the infeed path (18) and the first storage path (24) which guides the products (4) to the outlet (14),
   **characterised in that**
   a storage path guide (20a), which transfers the products (4) from the second storage path (26) to the first storage path (24) is provided on the downstream end of the second storage path (26), and
   a discharge path (28) is provided downstream of the storage path guide (20a) in a longitudinal extension of the second storage path (26) and next to the first storage path (24).

10. Low pressure storage device (2, 2a) according to claim 6 or 9, **characterised in that** the discharge speed of the discharge path (28) can be controlled independently from the storage path speed ($v_{S1}$) of the first storage path (24).

11. Low pressure storage device (2, 2a) according to claim 10, **characterised in that** the discharge path (28) is divided into at least two discharge paths (28a, 28b), which are arranged adjacent to each other.

12. Low pressure storage device (2, 2a) according to claim 10 or 11, **characterised in that** during normal operation of the storage device (2) the two discharge belts (28a, 28b) can be controlled such that they meet the following inequalities (1) and (2):

$$v_{A1} \geq v_{S1} \qquad \dots(1)$$

$$v_{A2} \geq v_{A1} \qquad \dots(2)$$

wherein

   $v_{A1}$ = discharge speed of the first discharge belt (28a);
   $v_{S1}$ = storage path speed of the first storage path (24); and
   $v_{A2}$ = discharge speed of the second discharge belt (28b).

13. Low pressure storage device (2, 2a) according to any one of claims 10 to 12, **characterised in that** the discharge belts (28a, 28b) can be controlled during removal from storage operations of the storage device (2) such that the following inequalities (3) and (4) are met:

$$v_{A2} > v_{A1} \qquad \dots(3)$$

$$v_{A1} > v_{S1} \qquad \dots(4)$$

wherein

$v_{A1}$ = discharge speed of the first discharge belt (28a);
$v_{A2}$ = discharge speed of the second discharge belt (28b); and
$v_{S1}$ = storage path speed of the first storage path (24).

14. Low pressure storage device (2, 2a) according to any one of claims 6 to 13, **characterised in that** the infeed speed ($v_z$) of the infeed path (18) and the storage path speeds ($v_{S1}$, $v_{S2}$) of the first and the second storage paths (24, 26) can be controlled steplessly independently from each other.

15. Low pressure storage device (2, 2a) according to any one of claims 6 to 14, **characterised in that** during storage operations of the storage device (2) the paths (18, 24, 26) can be controlled such that they meet the following inequalities (5) and (6):

$$v_{S1} > v_{S2} \qquad \dots (5)$$

$$v_z > v_{S1} \qquad \dots (6)$$

wherein

$v_{S1}$ = storage path speed of the first storage path (24);
$v_{S2}$ = storage path speed of the second storage path (26); and
$v_z$ = infeed speed of the infeed path (18).

16. Low pressure storage device (2, 2a) according to any one of claims 6 to 15, **characterised in that** during removal from storage operations of the storage device (2) the paths (18, 24, 26) can be controlled such that they meet the following inequalities (7) and (8):

$$v_{S1} > v_z \qquad \dots (7)$$

$$v_z > v_{S2} \qquad \dots (8)$$

wherein

$v_{S1}$ = storage path speed of the first storage path (24);
$v_{S2}$ = storage path speed of the second storage path (26); and
$v_z$ = infeed speed of the infeed path (18).

17. Low-pressure storage device (2) according to any one of claims 6 to 16, **characterised in that** during normal operation of the storage device (2, 2a) the paths (18, 24, 26) can be controlled such that they meet the following inequalities (9) and (10):

$$v_z \geq v_{S1} \qquad \dots (9)$$

$$v_{S1} > v_{S2} \qquad \dots (10)$$

wherein

$v_{S1}$ = storage path speed of the first storage path (24);
$v_{S2}$ = storage path speed of the second storage path (26); and
$v_z$ = infeed speed of the infeed path (18).

18. Low pressure storage device (2, 2a) according to any one of claims 6 to 17, **characterised in that** each path (18, 24, 26) and each belt (28a, 28b) is formed by several feed belts.

19. Low pressure storage device (2, 2a) according to claim 18, **characterised in that** the several feed belts can be driven at varying speeds.

**Revendications**

1. Procédé pour stocker par accumulation et pour transporter des produits (4) dans un dispositif de stockage par accumulation (2) basse-pression, qui comprend les étapes suivantes :

   introduction, au moyen d'une voie d'amenée (18), des produits (4) dans le dispositif de stockage par accumulation (2) au niveau d'une première extrémité (6) du dispositif de stockage par accumulation (2), qui présente une entrée (12),
   transport des produits (4) en direction d'une deuxième extrémité (8) du dispositif de stockage par accumulation (2), qui présente une sortie (14), et
   transfert des produits (4) sur une première voie de stockage par accumulation (24) agencée de manière voisine à la voie d'amenée (18), les produits (4) étant transportés en fonction d'une vitesse de voie de stockage par accumulation ($v_{S1}$) de la première voie de stockage par accumulation (24), vers une sortie (14) du dispositif de stockage par accumulation (2), et, étant transférés, lors du mode de stockage par accumulation du dispositif de stockage par accumulation (2), sur la première voie de stockage par accumulation (24) et sur une deuxième voie de stockage par accumulation (26), qui est agencée de manière directement voisine à la première,
   **caractérisé en ce que** les produits (4), en fonctionnement en mode normal, lors du stockage par accumulation et lors du déstockage du dispositif de stockage par accumulation (2), quittent la voie d'amenée (18) par un premier mouvement de déplacement latéral dans la moitié arrière du dispositif de stockage par accumulation (2) dans le sens du mouvement, et sont transportés en direction de la sortie (14), par un deuxième mouvement de déplacement latéral, qui est opposé au premier mouvement de déplacement latéral.

2. Procédé selon la revendication 1, **caractérisé en ce que** les produits (4), en fonctionnement en mode normal du dispositif de stockage par accumulation (2), sont tout d'abord transférés de la voie d'amenée (18) sur la voie de stockage par accumulation (24) agencée de manière voisine à la voie d'amenée, et de là sur une voie d'évacuation (28) agencée en aval de la voie d'amenée (18), et sont transportés par l'intermédiaire de cette voie d'évacuation (28) vers la sortie (14).

3. Procédé selon l'une des revendications 1 ou 2, **caractérisé en ce que** les produits (4), lors du deuxième mouvement de déplacement latéral, sont transportés au moins si loin, qu'ils quittent le dispositif de stockage par accumulation (2) dans le prolongement de la voie d'amenée (18).

4. Procédé selon la revendication 3, **caractérisé en ce que** les produits (4) quittent le dispositif de stockage par accumulation (2) sur un côté de la voie d'amenée (18), qui est opposé à une voie de stockage par accumulation (24) agencée à côté de la voie d'amenée (18).

5. Procédé pour stocker par accumulation et pour transporter des produits (4) dans un dispositif de stockage par accumulation (2a) basse-pression, qui comprend les étapes suivantes :

   introduction, au moyen d'une voie d'amenée (18), des produits (4) dans le dispositif de stockage par accumulation (2a) au niveau d'une première extrémité (6) du dispositif de stockage par accumulation (2), qui présente une entrée (12),
   transport des produits (4) en direction d'une deuxième extrémité (8) du dispositif de stockage par accumulation (2a), qui présente une sortie (14), et
   transfert des produits (4) sur une première voie de stockage par accumulation (24) agencée de manière voisine à la voie d'amenée (18),

les produits (4) étant transportés en fonction de la vitesse de voie de stockage par accumulation ($v_{S1}$) de la première voie de stockage par accumulation (24), vers une sortie (14) du dispositif de stockage par accumulation (2a), et, étant transférés, lors du mode de stockage par accumulation du dispositif de stockage par accumulation (2), sur la première voie de stockage par accumulation (24) et sur une deuxième voie de stockage par accumulation (26), qui est agencée de manière directement voisine de la première, et

les produits (4) quittant la voie d'amenée (18) par un premier mouvement de déplacement latéral dans la moitié arrière du dispositif de stockage par accumulation (2) dans le sens du mouvement, et étant transportés en direction de la sortie (14), par un deuxième mouvement de déplacement latéral, qui s'effectue dans le même sens que le premier mouvement de déplacement latéral,

**caractérisé en ce que**

les produits (4), en fonctionnement en mode normal du dispositif de stockage par accumulation (2a), sont tout d'abord transférés de la voie d'amenée (18) sur la première voie de stockage par accumulation (24), et de là sur une voie d'évacuation (28), qui est agencée en aval de la deuxième voie de stockage par accumulation (26) et dans la direction de l'étendue longitudinale de celle-ci, et sont ensuite transportés par cette voie d''évacuation (28), vers la sortie (14) ; et

les produits (4), lors du déstockage du dispositif de stockage par accumulation (2a), sont déviés de la deuxième voie de stockage par accumulation (26) sur la première voie de stockage par accumulation (24), par l'intermédiaire d'un guide de voie de stockage par accumulation (20a).

6. Dispositif de stockage par accumulation (2) basse-pression, pour stocker par accumulation des produits (4), comprenant :

un châssis présentant une première extrémité (6), une deuxième extrémité (8) et deux côtés longitudinaux (10a, 10b) mutuellement opposés,

une entrée (12), qui est réalisée au niveau de la première extrémité (6),

une sortie (14), qui est réalisée au niveau de la deuxième extrémité (8),

au moins une voie d'amenée (18), qui introduit les produits (4) dans le dispositif de stockage par accumulation (2) à la première extrémité (6), et les transporte en direction de la deuxième extrémité (8) avec une vitesse d'amenée ($v_z$) pouvant être régulée,

au moins une première et une deuxième voie de stockage par accumulation (24, 26), dont il est possible de faire varier les vitesses de voie de stockage par accumulation ($v_{S1}$, $v_{S2}$),

la première voie de stockage par accumulation (24) étant réalisée de manière à être voisine de la voie d'amenée (18) de façon telle, que les produits (4) puissent être transportés vers la sortie (14) en fonction de la vitesse de voie de stockage par accumulation ($v_{S1}$) de la première voie de stockage par accumulation (24),

la deuxième voie de stockage par accumulation (26) étant prévue directement voisine de la première voie de stockage par accumulation (24), et

un guide de sortie (30) étant prévu à l'extrémité des voies de stockage par accumulation (24, 26), et guidant les produit (4) vers la sortie (14),

**caractérisé**

**en ce qu'**il est prévu un guide de voie de stockage par accumulation (20), qui transfère les produits (4) de la voie d'amenée (18) sur la première voie de stockage par accumulation (24) dans la moitié arrière du dispositif de stockage par accumulation (2) dans le sens du mouvement, et en ce qu'il est prévu une voie d'évacuation (28), en aval du guide de voie de stockage par accumulation (20), dans la direction d'étendue longitudinale de la voie d'amenée (18) et à côté de la première voie de stockage par accumulation (24).

7. Dispositif de stockage par accumulation (2) basse-pression selon la revendication 6, **caractérisé en ce que** les produits (4), en fonctionnement en mode normal du dispositif (2), peuvent être transportés vers la sortie (14) en fonction de la vitesse d'amenée ($v_z$) de la voie d'amenée (18) et de la vitesse de voie de stockage par accumulation ($v_{S1}$) de la première voie de stockage par accumulation (24).

8. Dispositif de stockage par accumulation (2) basse-pression selon la revendication 6 ou la revendication 7, **caractérisé en ce que** l'entrée (12) est prévue de manière à être latéralement voisine d'un des côtés longitudinaux (10a).

9. Dispositif de stockage par accumulation (2a) basse-pression, pour stocker par accumulation des produits (4), comprenant :

un châssis présentant une première extrémité (6), une deuxième extrémité (8) et deux côtés longitudinaux (10a, 10b) mutuellement opposés,

une entrée (12), qui est réalisée au niveau de la première extrémité (6),

une sortie (14), qui est réalisée au niveau de la deuxième extrémité (8),

au moins une voie d'amenée (18), qui introduit les produits (4) dans le dispositif de stockage par accumulation (2) à la première extrémité (6), et les transporte en direction de la deuxième extrémité (8) avec une vitesse d'amenée ($v_z$) pouvant être régulée,

au moins une première et une deuxième voie de stockage par accumulation (24, 26), dont il est possible de faire varier les vitesses de voie de stockage par accumulation ($v_{S1}$, $v_{S2}$),

la première voie de stockage par accumulation (24) étant réalisée de manière à être voisine de la voie d'amenée (18) de façon telle que les produits (4) puissent être transportés vers la sortie (14) en fonction de la vitesse de voie de stockage par accumulation ($v_{S1}$) de la première voie de stockage par accumulation (24),

la deuxième voie de stockage par accumulation (26) étant prévue directement voisine de la première voie de stockage par accumulation (24), et

un guide de sortie (30a) étant prévu à l'extrémité de la voie d'amenée (18) et de la première voie de stockage par accumulation (24), et guidant les produit (4) vers la sortie (14),

**caractérisé**

**en ce qu'**il est prévu un guide de voie de stockage par accumulation (20a), qui transfère les produits (4) de la deuxième voie de stockage par accumulation (26) sur la première voie de stockage par accumulation (24), à l'extrémité aval de la deuxième voie de stockage par accumulation (26), et

**en ce qu'**il est prévu une voie d'évacuation (28), en aval du guide de voie de stockage par accumulation (20a), dans la direction d'étendue longitudinale de la deuxième voie de stockage par accumulation (26) et à côté de la première voie de stockage par accumulation (24) .

**10.** Dispositif de stockage par accumulation (2, 2a) basse-pression, selon la revendication 6 ou la revendication 9, **caractérisé en ce que** la vitesse de voie d'évacuation de la voie d'évacuation (28) peut être régulée en continu indépendamment de la vitesse de voie de stockage par accumulation ($v_{S1}$) de la première voie de stockage par accumulation (24).

**11.** Dispositif de stockage par accumulation (2, 2a) basse-pression, selon la revendication 10, **caractérisé en ce que** la voie d'évacuation (28) est subdivisée en au moins deux bandes d'évacuation (28a, 28b), qui sont agencées de manière mutuellement voisine.

**12.** Dispositif de stockage par accumulation (2, 2a) basse-pression, selon l'une des revendications 10 ou 11, **caractérisé en ce qu'**en fonctionnement en mode normal du dispositif de stockage par accumulation (2), les deux bandes d'évacuation (28a, 28b) peuvent être commandées de manière à satisfaire aux inégalités (1) et (2) suivantes :

$$v_{A1} \geq v_{S1} \qquad \qquad \dots (1)$$

$$v_{A2} \geq v_{A1} \qquad \qquad \dots (2),$$

avec

$v_{A1}$ = vitesse d'évacuation de la première bande d'évacuation (28a) ;

$v_{S1}$ = vitesse de voie de stockage par accumulation de la première voie de stockage par accumulation (24) ; et

$v_{A2}$ = vitesse d'évacuation de la deuxième bande d'évacuation (28b).

**13.** Dispositif de stockage par accumulation (2, 2a) basse-pression, selon l'une des revendications 10 à 12, **caractérisé en ce qu'**en fonctionnement en mode de déstockage du dispositif de stockage par accumulation (2), les bandes d'évacuation (28a, 28b) peuvent être commandées de manière à satisfaire aux inégalités (3) et (4) suivantes :

$$v_{A2} > v_{A1} \qquad \qquad \dots (3)$$

$$v_{A1} > v_{S1} \qquad \qquad \dots (4),$$

avec

$v_{A1}$ = vitesse d'évacuation de la première bande d'évacuation (28a) ;
$v_{A2}$ = vitesse d'évacuation de la deuxième bande d'évacuation (28b) ; et
$v_{S1}$ = vitesse de voie de stockage par accumulation de la première voie de stockage par accumulation (24).

**14.** Dispositif de stockage par accumulation (2, 2a) basse-pression, selon l'une des revendications 6 à 13, **caractérisé en ce que** la vitesse d'amenée ($v_Z$) de la voie d'amenée (18) et les vitesses de voie de stockage par accumulation ($v_{S1}$, $v_{S2}$) des première et deuxième voies de stockage par accumulation (24, 26) peuvent être régulées en continu indépendamment l'une de l'autre.

**15.** Dispositif de stockage par accumulation (2, 2a) basse-pression, selon l'une des revendications 6 à 14, **caractérisé en ce qu'**en fonctionnement en mode de stockage du dispositif de stockage par accumulation (2), les voies (18, 24, 26) peuvent être commandées de manière à satisfaire aux inégalités (5) et (6) suivantes :

$$V_{S1} > v_{S2} \qquad\qquad\qquad …(5)$$

$$V_Z > v_{S1} \qquad\qquad\qquad …(6),$$

avec

$v_{S1}$ = vitesse de voie de stockage par accumulation de la première voie de stockage par accumulation (24) ;
$v_{S2}$ = vitesse de voie de stockage par accumulation de la deuxième voie de stockage par accumulation (26) ; et
$v_Z$ = vitesse d'amenée de la voie d'amenée (18).

**16.** Dispositif de stockage par accumulation (2, 2a) basse-pression, selon l'une des revendications 6 à 15, **caractérisé en ce qu'**en fonctionnement en mode de déstockage du dispositif de stockage par accumulation (2), les voies (18, 24, 26) peuvent être commandées de manière à satisfaire aux inégalités *(7)* et *(8)* suivantes :

$$V_{S1} > v_Z \qquad\qquad\qquad …(7)$$

$$V_Z > v_{S2} \qquad\qquad\qquad …(8),$$

avec

$v_{S1}$ = vitesse de voie de stockage par accumulation de la première voie de stockage par accumulation (24) ;
$v_{S2}$ = vitesse de voie de stockage par accumulation de la deuxième voie de stockage par accumulation (26) ; et
$v_Z$ = vitesse d'amenée de la voie d'amenée (18).

**17.** Dispositif de stockage par accumulation (2, 2a) basse-pression, selon l'une des revendications 6 à 16, **caractérisé en ce qu'**en fonctionnement en mode normal du dispositif de stockage par accumulation (2, 2a), les voies (18, 24, 26) peuvent être commandées de manière à satisfaire aux inégalités *(9)* et *(10)* suivantes :

$$V_Z \geq v_{S1} \qquad\qquad\qquad …(9)$$

$$V_{S1} > v_{S2} \qquad\qquad\qquad …(10),$$

avec

$v_{S1}$ = vitesse de voie de stockage par accumulation de la première voie de stockage par accumulation (24) ;
$v_{S2}$ = vitesse de voie de stockage par accumulation de la deuxième voie de stockage par accumulation (26) ; et
$v_z$ = vitesse d'amenée de la voie d'amenée (18).

18. Dispositif de stockage par accumulation (2, 2a) basse-pression, selon l'une des revendications 6 à 17, **caractérisé en ce que** chaque voie (18, 24, 26) et chaque bande (28a, 28b) est formée par plusieurs bandes de transport.

19. Dispositif de stockage par accumulation (2, 2a) basse-pression, selon la revendication 18, **caractérisé en ce que** lesdites plusieurs bandes de transport peuvent être entraînées respectivement selon des vitesses différentes.

FIG. 1

FIG. 2

EP 2 008 952 B1

AV 4 18 24 28a 28b 26 AN

**FIG. 3**

28

AV 4 18 24 26 AN

**FIG. 4**

FIG. 5

FIG. 6

FIG. 7

FIG. 8

FIG. 9

EP 2 008 952 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2504264 A1
- EP 1144285 B1
- EP 1380522 B1
- US 4361759 A
- JP 2001240238 A